(19) Europäisches Patentamt
European Patent Office
Office européen des brevets

(11) **EP 3 623 892 A1**

(12) **EUROPEAN PATENT APPLICATION**
published in accordance with Art. 153(4) EPC

(43) Date of publication:
**18.03.2020 Bulletin 2020/12**

(51) Int Cl.:
***G05B 23/02*** *(2006.01)*

(21) Application number: **18798507.2**

(86) International application number:
**PCT/JP2018/016496**

(22) Date of filing: **23.04.2018**

(87) International publication number:
**WO 2018/207605 (15.11.2018 Gazette 2018/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.05.2017 JP 2017093586**

(71) Applicant: **Hitachi, Ltd.**
**Tokyo 100-8280 (JP)**

(72) Inventors:
• **KAGEYAMA, Kouji**
  **Tokyo 100-8280 (JP)**
• **KUSUNO, Nobuhiro**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **ANOMALY ASSESSMENT DEVICE, ANOMALY ASSESSMENT METHOD, AND ANOMALY ASSESSMENT PROGRAM**

(57)     The purpose of the present invention is to enable a rapid and appropriate performance of an assessment on whether an object to be assessed is in a normal or an anomalous state, even where actual measurement data of the object to be assessed is scarce. Provided is a computer 1, comprising a CPU 11, for: specifying first learning categories for classifying, on the basis of reference data, whether actual measurement data is data signifying a normal state or data signifying an anomalous state; specifying second learning categories for classifying, on the basis of benchmark data, whether the actual measurement data is data signifying the normal state or data signifying the anomalous state; specifying the disposition, with respect to the actual measurement data, of associated learning categories associated with associationless learning categories having no associated second learning categories, on the basis of the positional relationship between the first learning categories and associated second learning categories; and assessing, for data to be assessed, whether the object to be assessed is in the normal state or the anomalous state, by means of the affiliation or lack thereof with the second learning categories and associated learning categories.

*FIG. 1*

**Description**

Technical Field

The present invention relates to a normality/abnormality discrimination device or the like that discriminates whether a discrimination target object, such as a wind power plant, a water treatment plant, a thermal power plant, and a nuclear power plant, is normal or abnormal.

Background Art

Currently, various plants are operated to produce various products, such as electric power and water, in various industries. When an abnormality occurs in these plants, it is difficult to supply the product, resulting in a large loss and repair cost. It is practically difficult to completely prevent the occurrence of such plant abnormality and failure. In order to minimize such damage, it is desirable to detect the plant abnormality as early as possible.

For example, a technique using an adaptive resonance theory (ART), for example, is known as one of highly versatile abnormality detection techniques. Specifically, for example, there is known a technique of determining a normal category range in which normal data exists in advance using operation data in a normal state, discriminating that discrimination target operation data obtained during an operation is normal when the discrimination target operation data is within the learned normal category, and regarding that the discrimination target operation data is abnormal when the discrimination target operation data is out of the normal category and outputting warning.

In order to use this abnormality detection technique, it is necessary to prepare the operation data in the normal state in advance and determine the normal category range. For this reason, it takes a long period of time in order to sufficiently obtain the learning data in the normal state, and there is a problem that it is difficult to start an abnormality detection process during such a period until the sufficient learning data is obtained.

As a technique for solving such a problem, a technique described in PTL 1 is known. According to the technique described in PTL 1, whether data is classified into one category of a diagnostic model is discriminated, whether an operation pattern has been changed is discriminated when the data is not classified, pseudo data is created when the operation pattern is changed and there is no data of the same operation pattern, and diagnose is performed with a diagnostic model constructed using the pseudo data.

Citation List

Patent Literature

PTL 1: JP 2015-103218 A

Summary of Invention

Technical Problem

For example, long-term operation data to learn normal states of all operation patterns becomes unnecessary when using the technique described in PTL 1. However, it is necessary to construct the diagnostic model with data of the same operation pattern as that at the time of detecting a state change after detecting the state change with the diagnostic model, and thus, a time delay occurs to discriminate that an abnormality has occurred.

Since there is a possibility that a great damage is caused if an abnormality occurs in a plant, and thus, the occurrence of such a time delay is not preferable.

The present invention has been made in view of the above circumstances, and an object thereof is to provide a technique capable of rapidly and appropriately discriminating whether a discrimination target object is normal or abnormal even when actual measurement data of the discrimination target object is small.

Solution to Problem

In order to achieve the above object, a normality/abnormality discrimination device according to one aspect is a normality/abnormality discrimination device, which discriminates whether a discrimination target object is normal or abnormal based on actual measurement data measured for the discrimination target object, including: a first learning category identifying unit that identifies a plurality of first learning categories configured to classify the actual measurement data into either data indicating that the discrimination target object is normal or data indicating that the discrimination target object is abnormal based on reference data serving as a reference for the actual measurement data measured for the discrimination target object; a second learning category identifying unit that identifies one or more second learning categories configured to classify the actual measurement data into either data indicating that the discrimination target object is normal or data indicating that the discrimination target object is abnormal based on standard data that is actual measurement data serving as a standard and measured for the discrimination target object; a corresponding learning category identifying unit that identifies an arrangement of a corresponding learning category, which is a learning category corresponding to correspondence-absent learning category, which is one or more learning categories having no corresponding second learning category in the first learning category, with respect to the actual measurement data based on an arrangement relationship between the first learning category and the corresponding second learning category; and a discrimination unit that determines whether discrimination target data measured for the discrimination target object belongs to the second learning category and the corresponding learning category to discriminate whether the discrimination target object is normal or abnormal.

Advantageous Effects of Invention

According to the present invention, it is possible to rapidly and appropriately discriminate whether a discrimination target object is normal or abnormal even when the actual measurement data of the discrimination target object is small.

Brief Description of Drawings

[0012]

　　　[FIG. 1] FIG. 1 is an overall configuration diagram of a normality/abnormality discrimination system according to a first embodiment.
　　　[FIG. 2] FIG. 2 is a diagram for describing a normality/abnormality discrimination process according to the first embodiment.
　　　[FIG. 3] FIG. 3 is an example of a category information screen according to a second embodiment.
　　　[FIG. 4] FIG. 4 is an example of a category information screen according to a modification.

Description of Embodiments

Several embodiments will be described with reference to the drawings. Incidentally, the embodiments to be described hereinafter do not limit the invention according to the claims, and further, all of the elements described in the embodiments and combinations thereof are not necessarily indispensable for the solution of the invention.

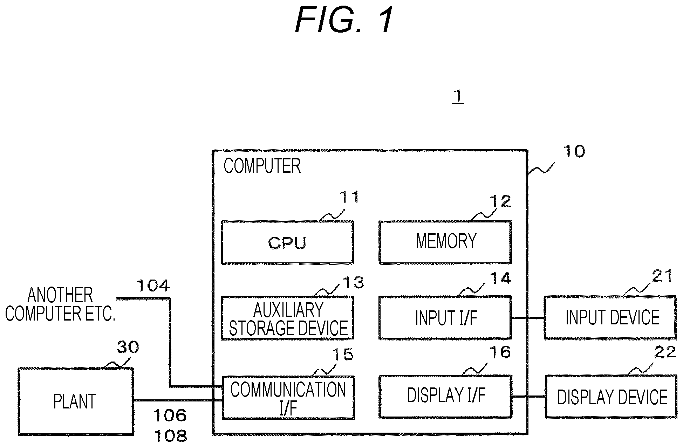

FIG. 1 is an overall configuration diagram of a normality/abnormality discrimination system according to a first embodiment.

A normality/abnormality discrimination system 1 includes a computer 10 as an example of a normality/abnormality discrimination device, an input device 21, a display device 22, and a plant 30 as an example of a discrimination target object for which normality/abnormality is discriminated. The computer 10 and the plant 30 are connected via a network such as a wired local area network (LAN) and a wireless LAN.

Examples of the plant 30 include a wind power plant, a water treatment plant, a thermal power plant, and a nuclear power plant. The discrimination target object is not limited to the plant, but may be a device, equipment, a facility, or a large-scale system. In short, any discrimination target object may be set as long as operation data (actual measurement data) including a plurality of items (state information of the discrimination target object) can be acquired and actual measurement data thereof can be output to the computer 10.

The input device 21 is, for example, a device that can be connected to the computer 10, such as a mouse and a keyboard, and receives an input operation by an operator (user) of the computer 10. The display device 22 is a display device that can be connected to the computer 10, such as a liquid crystal display, and displays various types of information.

The computer 100 includes a central processing unit (CPU) 11 as an example of a processor, a memory 12, an auxiliary storage device 13, an input interface (input I/F) 14, a communication interface (communication I/F) 15, and a display interface (display I/F) 16.

The input I/F 14 receives a signal from the input device 21. The display I/F 16 transmits an image signal of an image to be displayed on the display device 22.

The communication I/F 15 is, for example, an interface, such as a wired LAN card and a wireless LAN card, and communicates with the plant 30 (a communication device in the plant 30), another computer, or the like via the network. In the present embodiment, the computer 10 receives reference data 104 serving as a reference for actual measurement data of the plant 30 from another computer via, for example, the communication I/F 15, receives, via the communication I/F 15, standard data 106 that is actual measurement data serving as a standard in which a state of the plant 30 has been grasped and that has been acquired in advance from the plant 30, and receives actual measurement data (discrimination target data 108), which serves as a target for which normality/abnormality is determined, from the plant 30 via the communication I/F 15.

Here, the reference data 104 may be, for example, estimated data relating to actual measurement data generated by simulation using a physical model that simulates the plant 30. The computer that executes the simulation based on the physical model may be the computer 10 or another computer. When the reference data 104 is obtained by the simulation using the physical model, it is possible to obtain an extremely large amount of reference data in a short time since the simulation can be executed assuming various conditions on a computer. Incidentally, only normal data or only abnormal data is used as the reference data 104 in the present embodiment.

In addition, the reference data 104 may be, for example, past actual measurement data of the same type of discrimination target object or past actual measurement data of a discrimination target object (for example, a discrimination target object before maintenance) in a state different from a current state. Since the same type of discrimination target object has already been operated for a long period of time and has been subjected to various operating conditions in many cases, there is a high possibility that a sufficient amount of actual measurement data can be secured. Incidentally, when discrimination target objects are generators, for example, generators operated based on the same principle may be used as the same type of discrimination target object even if power generation capacities are not the same. In short, any device that is operated based on the same principle may be used. Incidentally, only normal data or only abnormal data is used as the reference data 104 in the present embodiment.

In addition, the standard data 106 may be actual measurement data at the time of trial operation when the plant 30 is newly constructed or after maintenance of the plant 30 is performed. Since the trial operation is generally performed for a short period of time, the amount of collected data is relatively small. In addition, in a plant, such as a wind power plant, whose input conditions depend on the environment, there is even a case where it is difficult to acquire actual measurement data regarding various operating conditions. For this reason, there is a case where it is difficult to secure the amount of data sufficient to discriminate whether normality or abnormality of the plant 30 with the standard data 106.

The CPU 11 executes various processes according to programs stored in the memory 12 and/or the auxiliary storage device 13. In the present embodiment, the CPU 11 executes the program to configure a functional unit that executes a normality/abnormality discrimination process of discriminating whether the plant 30 is normal or abnormal and displaying a discrimination result (information indicating whether the plant 30 is normal or abnormal) on the display device 22. The normality/abnormality discrimination process will be described later. The CPU 11 executes the programs to configure a first learning category identifying unit, a second learning category identifying unit, a corresponding learning category identifying unit, a discrimination unit, a result display unit, a correspondence relationship identifying unit, a display control unit, a designation receiving unit, an input screen display unit, and a correspondence graph display control unit.

The memory 12 is, for example, a random access memory (RAM), and stores the programs to be executed by the CPU 11 and necessary information.

The auxiliary storage device 13 is, for example, a bird disk, a flash memory, or the like and stores the programs to be executed by the CPU 11 and data to be used by the CPU 11.

Next, the normality/abnormality discrimination process executed by the CPU 11 will be described.

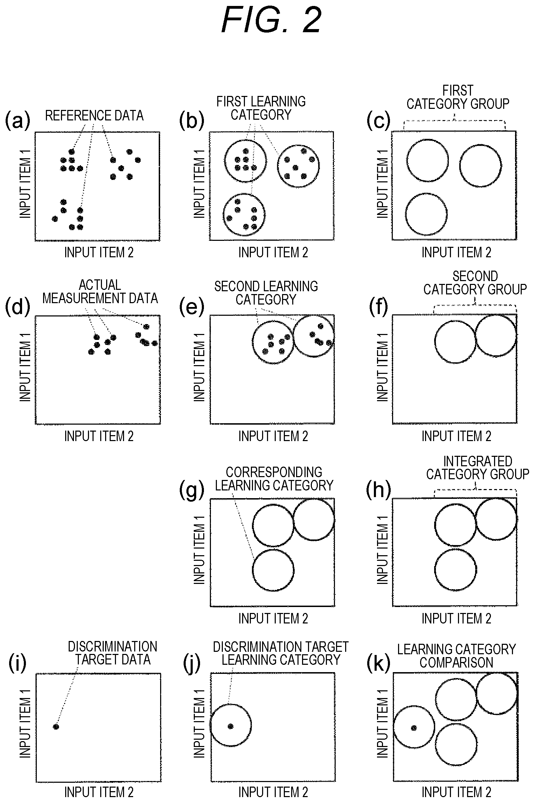

FIG. 2 is a diagram for describing the normality/abnormality discrimination process according to the first embodiment. FIG. 2 illustrates the process of discriminating normality or abnormality of the plant 30 using the reference data 104, the standard data 106, and the discrimination target data 108. FIGS. 2(a) to 2(c) illustrate a process of identifying a category (first learning category) using the reference data 104, FIGS. 2(d) to 2(f) illustrate a process of identifying a category (second learning category) using the standard data 106, FIGS. 2(g) to 2(h) illustrate a process of identifying a learning category to be used when determining normality or abnormality of the discrimination target data based on the first learning category and the second learning category, and FIGS. 2(i) to 2(k) illustrate a process of discriminating normality or abnormality of the plant 30 based on the discrimination target data 108. Incidentally, two items (input items) (an input item 1 and an input item 2) included in the reference data 104, the standard data 106, and the discrimination target data 108 are assumed conveniently in FIG. 2 for the sake of simplicity, and FIGS. 2(a) to (k) illustrates data and categories with graphs in which the vertical axis is the input item 1 and the horizontal axis is the input item 2.

In the reference data 104, a value of each input item is divided into several parts by switching of an operation mode of the plant 30 or the like as illustrated in FIG. 2(a). In general, the value of the reference data 104 is not always constant but exists with a certain degree of deviation, and thus, has a certain degree of distribution as illustrated in FIG. 2(a). The CPU 11 classifies the reference data 104 into one or more categories. As a mathematical technique for the classification into categories, for example, any of the Mahalanobis Taguchi method, an adaptive resonance theory, vector quantization, a neural network, a subspace method, deep learning, and the like may be used.

When the CPU 11 performs the classification using the adaptive resonance theory, the reference data 104 illustrated in FIG. 2(a) is classified into one or more (three in FIG. 2(b)) categories (first learning categories), for example, as illustrated in FIG. 2(b). The CPU 11 grasps a set of the first learning categories illustrated in FIG. 2(b) as a first category group as illustrated in FIG. 2(c).

For example, when all pieces of the reference data 104 are data in a normal state, the first learning category can be considered to be a normal state category. For this reason, it is possible to discriminate that the plant 30 (discrimination target data) is normal when the discrimination target data is within the first learning category, and it is possible to discriminate that the plant 30 is not normal (that is, abnormal) when the discrimination target data is out of all the first learning categories.

On the other hand, when all pieces of the reference data 104 are data in an abnormal state, the first learning category can be considered to be an abnormal state category. For this reason, it is possible to discriminate that the plant 30 is abnormal when the discrimination target data is within the first learning category, and it is possible to discriminate that the plant 30 is not abnormal (that is, normal) when the discrimination target data is out of all the first learning categories.

I is important to be capable of sufficiently identifying the first learning categories for pieces of data in the normal state that are likely to occur in order to enable accurate discrimination so that a large amount of normal state (or abnormal state) data is required. In the present embodiment, for example, the past data of the same type of discrimination target object or the data obtained by simulation using the physical model is used as the reference data 104, and thus, a large amount of data can be collected so that there is no problem. However, the first learning category is not obtained from actual measurement data of the plant 30 in a current state, and thus, there is a risk that it is difficult to discriminate normality or abnormality with high accuracy if the first learning category is directly used as the discrimination target data measured in the plant 30,

In the standard data 106, a value of each input item is divided into several parts by switching of an operation mode of the plant 30 or the like as illustrated in FIG. 2(d). However, the standard data 106 has a small amount of data and does not cover actual measurement data in various states of the plant 30.

The CPU 11 classifies the standard data 106 into one or more categories by the same method as the reference data 104.

When the CPU 11 performs the classification using the adaptive resonance theory, the standard data 106 illustrated in FIG. 2(d) is classified into one or more (two in FIG. 2(e)) categories (second learning categories), for example, as illustrated in FIG. 2(e). The CPU 11 grasps a set of the second learning categories illustrated in FIG. 2(f) as a second category group as illustrated in FIG. 2(e). Incidentally, the reference data 104 and the standard data 106 generally do not coincide, and thus, the first learning category and the second learning category do not coincide, and the first category group and the second category group do not coincide.

Here, since the discrimination target data 108 is actual measurement data during the current operation of the plant 30, it is desirable to use the second learning category identified using the standard data 106 based on the same plant 30 in order to discriminate whether the plant 30 is normal or abnormal with the discrimination target data 108. However, the standard data configured to identify the second learning category is, for example, data obtained by the operation for a short period of time, and thus, is likely to be insufficient to cover learning categories corresponding to many real states of the plant 30.

On the other hand, the accuracy is lowered according to the first learning category identified by the reference data 104 having data under many conditions as compared to the second learning category, but there is a case where a learning category in a range that is not identifiable as the second learning category may be identified.

For example, as illustrated in FIG. 2(d), it is assumed that the standard data 106 is concentrated on the upper side and actual measurement data located on the lower left side has not been obtained. In this case, two second learning categories are generated on the upper side, and no learning category is generated on the lower left side as illustrated in FIG. 2(e). On the other hand, there is a case where the reference data 104 located on the lower left side can be obtained if using the reference data 104 as illustrated in FIG. 2(a), and in this case, the learning category is generated on the lower left side as illustrated in FIG. 2(b). In this manner, it is possible to identify more learning categories with the reference data 104 having a large amount of data than the standard data 106.

Therefore, the first learning category is utilized to fill in a shortage of the second learning category in the present embodiment.

In the present embodiment, the CPU 11 identifies a correspondence relationship between the first learning category and the second learning category, and identifies an arrangement (for example, a position, a range, or the like) of the first learning category (correspondence-absent learning category) having no learning category corresponding to the second learning category based on a positional relationship between the corresponding first learning category and second learning category. Here, the correspondence relationship between the first learning category and the second learning category may be identified according to operator's input via the input device 21, or the CPU 11 may identify the correspondence relationship based on a positional relationship between the first learning category and the second learning category.

Specifically, when it is identified that the first learning category on the upper left side in FIG. 2(b) corresponds to the second learning category on the upper left side in FIG. 2(e) and the first learning category on the upper right side of FIG. 2(b) corresponds to the second learning category on the upper right side of FIG. 2(e), it is possible to identify an arrangement assumed to exist in FIG. 2(e) of the first learning category (correspondence-absent learning category) on the lower side existing in FIG. 2(b) by mathematically processing a difference in the positional relationship of these corresponding learning categories.

A result of identifying the arrangement assumed to exist in FIG. 2(e) of the first learning category on the lower side existing in FIG. 2(b) by the CPU 11 is obtained as illustrated in FIG. 2(g). Incidentally, as the mathematical process based on the difference in the positional relationship between the corresponding first learning category and the second learning category, translation, enlargement (reduction), and the like may be combined, but the process is not limited to these processing methods. For example, when a position in the input item 1 of the corresponding first learning category is just offset by a certain value with respect to a position in the input item 1 of the second learning category, a first learning category having no corresponding second learning category may be arranged at a position translated (shifted) in an axial direction of the input item 1.

The CPU 11 grasps a set of the second learning category illustrated in FIG. 2(g) and the learning category (corresponding learning category) whose arrangement has been identified based on the first learning category and the second learning category as an integrated category group as illustrated in FIG. 2(h). When the normality or abnormality of the plant 30 is discriminated using the discrimination target data, this integrated category group is used. Incidentally, the processing up to acquisition of the integrated category group illustrated in FIG. 2(h) is executed before the discrimination target data 108 is received.

When the CPU 11 receives the discrimination target data 108, the CPU 11 performs the same category classification as described above on the discrimination target data 108 to generate a discrimination target learning category including the discrimination target data 108. Next, the CPU 11 determines whether the discrimination target learning category is included in the learning categories of the integrated category group, discriminates that the plant 30 is in a state corresponding to the learning category (normal when the learning category corresponds to the normal state) if the target learning category is included in the learning categories of the integrated category group or discriminates that the plant 30 is in a state not corresponding to the learning category (abnormal when the learning category corresponds to the normal state) if the target learning category is not included in the learning categories of the integrated category group, and displays the discrimination result on the display device 22. Here, whether the discrimination target learning category is included in the learning categories of the integrated category group may be determined depending on, for example, whether a center of the discrimination target learning category is included in the learning categories of the integrated category group.

For example, when the discrimination target data 108 illustrated in FIG. 2(i) is received, the CPU 11 performs the same category classification as described above on the discrimination target data 108 to generate a discrimination target learning category as illustrated in FIG. 2(j). Here, a positional relationship between the discrimination target learning category illustrated in FIG. 2(j) and the integrated category group illustrated in FIG. 2(h) is obtained as illustrated in FIG. 2(k). In this case, since the discrimination target learning category is not included in the learning categories of the integrated category group, the CPU 11 discriminates that the plant 30 is not in the state corresponding to the learning category.

For example, when normality/abnormality discrimination is performed using only the first category group illustrated in FIG. 2(c), the normality/abnormality discrimination is performed using a learning category different from a current state of the plant 30 so that the discrimination result becomes inaccurate. In addition, when normality/abnormality discrimination is performed using only the second category group illustrated in FIG. 2(f), the normality/abnormality discrimination is performed only with insufficient learning categories, which may result in inefficiency due to erroneous report or misreport and a loss of system reliability. In addition, when normality/abnormality discrimination is performed using one obtained by simply adding the first category group illustrated in FIG. 2(c) and the second category group illustrated in FIG. 2(f), a first category group different from a current state of the plant 30 is used so that the discrimination result is inaccurate.

On the other hand, when the above-described integrated category group is used, it is possible to perform the normality/abnormality discrimination with the second category group, and further, it is possible to appropriately perform the normality/abnormality discrimination of the plant 30 using the corresponding learning category even in the range lacking in the second category group.

Next, a normality/abnormality discrimination system according to the second embodiment will be described. Incidentally, the drawing of the normality/abnormality discrimination system according to the first embodiment is used as appropriate, and parts similar to those in the normality/abnormality discrimination system according to the first embodiment will be described using the same reference signs.

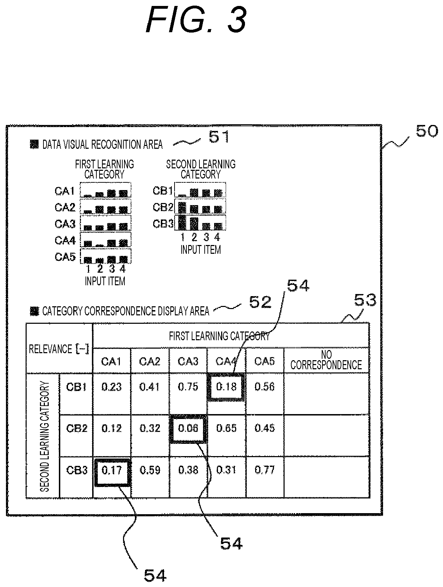

The normality/abnormality discrimination system according to the second embodiment is obtained by causing the CPU 11 to perform a process of displaying a category information screen 50 (correspondence relationship input screen: see FIG. 3) and the like in the normality/abnormality discrimination system according to the first embodiment.

FIG. 3 is an example of the category information screen according to the second embodiment.

The category information screen 50 includes a data visual recognition area 51 and a category correspondence display area 52. In the data visual recognition area 51, a content relating to a first learning category and a content relating to a second learning category are displayed. Incidentally, actual measurement data is assumed to have four input items the present embodiment.

FIG. 3 illustrates that five CA1 to CA5 are generated as the first learning categories, and three CB1 to CB3 are generated as the second learning categories.

Four bar graphs displayed to correspond to each of the first learning category and the second learning category respectively indicate values of the input items at the center of the corresponding learning category. Since the value of the input item at the center of each learning category is indicated by the bar graph, a positional relationship between learning categories can be easily grasped in a visual manner. Incidentally, the center value of the learning category may be displayed on a radar chart instead of being displayed on the bar graph.

The category correspondence display area 52 displays a two-axis correspondence table 53 in which the first learning categories are arranged in the horizontal direction and the second learning categories are arranged in the vertical direction. In order to grasp the two types of correspondence relationships between the first learning category and the second learning category, it is desirable to display the correspondence in a table format for easy understanding.

The correspondence table 53 illustrates the relevance between each of the first learning categories CA1 to CA5 and each of the second learning categories CB1 to CB3. In the present embodiment, the relevance is, for example, a value corresponding to a distance (inter-category distance) between centers of the first learning category and the second learning category.

The relevance is calculated by the CPU 11 by the following calculation method.

Assuming that coordinates (values of the respective items) of the center of the first learning category are (w11, x11, y11, z11) and coordinates of the center of the second learning category are (w21, x21, y21, z21), the relevance between the first learning category and the second learning category is calculated by the following Formula (1).

$$\text{Relevance} = (w11 - w21)^2 + (x11 - x21)^2 + (y11 - y21)^2 + (z11 - z21)^2 \quad \cdot\cdot\cdot (1)$$

The relevance is zero when the centers of the first learning category and the second learning category coincide. In addition, when the centers of the first learning category and the second learning category are greatly separated, the relevance has a large value. Incidentally, the calculation method of the relevance is not limited to the above formula. When absolute values of the respective input items are greatly different, the values of the input items may be normalized so as to fall within the range from zero to one, and the calculation may be performed using the normalized values.

In the correspondence table 53, the correspondence relationship between the first learning category and the second learning category is displayed using a thick frame icon 54. In the present embodiment, there is strong association as the relevance is small and closer to zero. At the time of initial display of the category information screen 50, the CPU 11 identifies a learning category in which one first learning category corresponds to one second learning category based on the relevance, and displays such an identification result using the icon 54. In the example of FIG. 3, the CPU 11 identifies that the second learning category CB1 corresponds to the first learning category CA4 having the lowest relevance, the second learning category CB2 corresponds to the first learning category CA3 having the lowest relevance, and the second learning category CB3 corresponds to the first learning category CA1 having the lowest relevance, and displays the icons 54 at the corresponding locations, respectively.

According to the category information screen 50, an operator can easily confirm which one of the second learning categories the first learning category corresponds to.

In the present embodiment, the CPU 11 is configured to receive a change in the correspondence relationship between the first learning category and the second learning category as the operator operates the input device 21 to change a position of the icon 54 in the correspondence table 53. When the CPU 11 receives the change in the correspondence relationship between the first learning category and the second learning category, the CPU 11 executes the process described in the first embodiment based on the received correspondence relationship.

The icon 54 is movable in the left-right direction on the same row of the correspondence table 53 by operating the input device 21. Incidentally, when the icon 54 in another row is arranged in the same column of the correspondence table 53, the icon 54 may be set to be immovable on the same column. In the present embodiment, there is a case where there is no first learning category corresponding to the second learning category even if the number of first learning categories is larger than the number of second learning categories, and thus, a column "no correspondence" is provided at the right end of the correspondence table 53 so that the icon 54 can be moved to the column of no correspondence.

According to the category information screen 50, the operator can freely change and set the correspondence relationship between the first learning category and the second learning category.

Next, a modification of the normality/abnormality discrimination system according to the second embodiment will be described. Incidentally, parts similar to those in the normality/abnormality discrimination system according to the second embodiment will be described using the same reference signs.

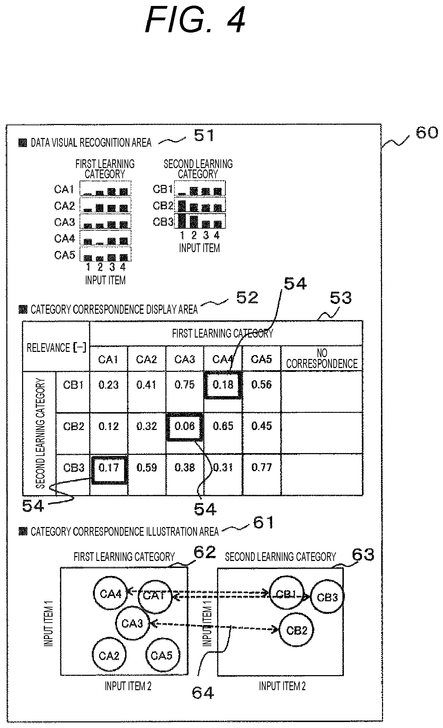

FIG. 4 is an example of a category information screen according to the modification.

A category information screen 60 according to the modification further includes a category correspondence illustration area 61 in addition to the category information screen 50 according to the second embodiment.

The category correspondence illustration area 61 displays a first learning category graph 62 in which each first learning category is displayed on a graph having some (two in FIG. 4) items among a plurality of items included in actual measurement data as axes, and a second learning category graph 63 in which each second learning category is displayed on a graph having some (two in FIG. 4) items among a plurality of items included in actual measurement data as axes.

The first learning category and the second learning category, associated in the correspondence table 53 between the first learning category in the first learning category graph 62 and the second learning category in the second learning category graph 63 in the category correspondence illustration area 61 are displayed to be connected by a correspondence line 64 indicating a correspondence relationship so that the correspondence relationship between the first learning category and the second learning category can be easily recognized. The first learning category graph 62, the second learning category graph 63, and the correspondence line 64 are created and displayed by the processing of the CPU 11. Incidentally, the first learning category graph 62 and the second learning category graph 63 are the graphs having two items included in the actual measurement data as the axes in the example of FIG. 4, but a graph having three or more items included in the actual measurement data as axes may be displayed. In addition, the first learning category and the second learning category may be arranged in the same graph instead of arranging the first learning category graph 62 and the second learning category graph 63 in separate graphs.

According to the normality/abnormality discrimination system according to this modification, the correspondence relationship between the first learning category and the second learning category can be easily grasped in a visual manner and it is possible to appropriately set the correspondence relationship between the first learning category and the second learning category while visually confirming the correspondence relationship.

Incidentally, the present invention is not limited to the above-described embodiments, and can be appropriately modified and implemented within a range not departing from a spirit of the present invention.

For example, the CPU 11 identifies a learning category for the discrimination target data 108, and determines whether the learning category is included in the learning categories of the integrated category group to discriminate whether the plant 30 is normal or abnormal in the first embodiment, but the present invention is not limited thereto. For example, whether the plant 30 is normal or abnormal may be discriminated by determining whether the discrimination target data 108 is included in the learning categories of the integrated category group.

In addition, some or all of the processes performed by the CPU 11 in the above embodiments may be performed by a hardware circuit. In addition, the program in the above embodiments may be installed from a program source. The program source may be a program distribution server or a storage media (for example, a portable storage media).

Reference Signs List

1    normality/abnormality discrimination system
10    computer
11    CPU
12    memory
13    auxiliary storage device
14    input I/F
15    communication I/F
16    display I/F
21    input device
22    display device
30    plant

**Claims**

1. A normality/abnormality discrimination device, which discriminates whether a discrimination target object is normal or abnormal based on actual measurement data measured for the discrimination target object, comprising:

   a first learning category identifying unit that identifies a plurality of first learning categories configured to classify the actual measurement data into either data indicating that the discrimination target object is normal or data indicating that the discrimination target object is abnormal based on reference data serving as a reference for the actual measurement data measured for the discrimination target object;

a second learning category identifying unit that identifies one or more second learning categories configured to classify the actual measurement data into either data indicating that the discrimination target object is normal or data indicating that the discrimination target object is abnormal based on standard data that is actual measurement data serving as a standard and measured for the discrimination target object;

a corresponding learning category identifying unit that identifies an arrangement of a corresponding learning category, which is a learning category corresponding to correspondence-absent learning category, which is one or more learning categories having no corresponding second learning category in the first learning category, with respect to the actual measurement data based on an arrangement relationship between the first learning category and the corresponding second learning category; and

a discrimination unit that determines whether discrimination target data measured for the discrimination target object belongs to the second learning category and the corresponding learning category to discriminate whether the discrimination target object is normal or abnormal.

2. The normality/abnormality discrimination device according to claim 1, wherein
the reference data is simulation data output from a physical model that simulates the discrimination target object.

3. The normality/abnormality discrimination device according to claim 1, wherein
the reference data is actual measurement data measured for a type of object identical to the discrimination target object.

4. The normality/abnormality discrimination device according to any one of claims 1 to 3, wherein
the standard data is actual measurement data measured during a relatively short time operation of the discrimination target object.

5. The normality/abnormality discrimination device according to any one of claims 1 to 4, further comprising
a result display unit that displays a discrimination result obtained by the discrimination unit on a display device.

6. The normality/abnormality discrimination device according to any one of claims 1 to 5, further comprising
a correspondence relationship identifying unit that identifies a correspondence relationship between the first learning category and the second learning category.

7. The normality/abnormality discrimination device according to claim 6, wherein
the correspondence relationship identifying unit identifies the correspondence relationship between the first learning category and the second learning category based on a distance in a coordinate system having a plurality of items included in the actual measurement data as axes.

8. The normality/abnormality discrimination device according to claim 6 or 7, further comprising
a display control unit that displays a correspondence relationship between the first learning category identified by the correspondence relationship identifying unit and the second learning category.

9. The normality/abnormality discrimination device according to any one of claims 1 to 8, further comprising
a designation receiving unit that receives designation of a correspondence relationship between the first learning category and the second learning category.

10. The normality/abnormality discrimination device according to claim 9, further comprising
an input screen display unit that displays a correspondence relationship input screen configured to receive the designation of the correspondence relationship between the first learning category and the second learning category.

11. The normality/abnormality discrimination device according to claim 10, wherein
on the correspondence relationship input screen, a display indicating the first learning category is arranged in a predetermined first direction, a display indicating the second learning category is arranged in a second direction perpendicular to the first direction, and an icon movable in the first direction with an operation of an input device is arranged at positions corresponding to each display indicating the second learning category, and
when the position of the icon is confirmed by the operation of the input device, the designation receiving unit receives the first learning category and the second learning category corresponding to the position of the icon on the correspondence relationship input screen as corresponding learning categories.

**12.** The normality/abnormality discrimination device according to any one of claims 1 to 11, further comprising a correspondence graph display control unit that displays each of the first learning category and the second learning category on a graph having a plurality of items included in the actual measurement data as axes and displays a correspondence relationship between the first learning category and the second learning category in a recognizable manner.

**13.** A normality/abnormality discrimination method performed by a normality/abnormality discrimination device, which discriminates whether a discrimination target object is normal or abnormal based on actual measurement data measured for the discrimination target object, the method comprising:

identifying a plurality of first learning categories configured to classify the actual measurement data into either data indicating that the discrimination target object is normal or data indicating that the discrimination target object is abnormal based on reference data serving as a reference for the actual measurement data measured for the discrimination target object;
identifying one or more second learning categories configured to classify the actual measurement data into either data indicating that the discrimination target object is normal or data indicating that the discrimination target object is abnormal based on standard data that is actual measurement data serving as a standard and measured for the discrimination target object;
identifying an arrangement of a corresponding learning category, which is a learning category corresponding to correspondence-absent learning category, which is one or more learning categories having no corresponding second learning category in the first learning category, with respect to the actual measurement data based on a positional relationship between the first learning category and the corresponding second learning category; and
determining whether discrimination target data, which is discrimination target actual measurement data measured for the discrimination target object, belongs to the second learning category and the corresponding learning category to discriminate whether the discrimination target object is normal or abnormal.

**14.** A normality/abnormality discrimination system comprising: a discrimination target object for which normality or abnormality is to be discriminated; and a normality/abnormality discrimination device that discriminates whether the discrimination target object is normal or abnormal based on actual measurement data measured for the discrimination target object, wherein
the normality/abnormality discrimination device comprises:

a first learning category identifying unit that identifies a plurality of first learning categories configured to classify the actual measurement data into either data indicating that the discrimination target object is normal or data indicating that the discrimination target object is abnormal based on reference data serving as a reference for the actual measurement data measured for the discrimination target object;
a second learning category identifying unit that identifies one or more second learning categories configured to classify the actual measurement data into either data indicating that the discrimination target object is normal or data indicating that the discrimination target object is abnormal based on standard data that is actual measurement data serving as a standard and measured for the discrimination target object;
a corresponding learning category identifying unit that identifies an arrangement of a corresponding learning category, which is a learning category corresponding to correspondence-absent learning category, which is one or more learning categories having no corresponding second learning category in the first learning category, with respect to the actual measurement data based on a positional relationship between the first learning category and the corresponding second learning category; and
a discrimination unit that discriminates whether discrimination target data measured for the discrimination target object belongs to the second learning category and the corresponding learning category to discriminate whether the discrimination target object is normal or abnormal.

# FIG. 1

# FIG. 2

(a) REFERENCE DATA

INPUT ITEM 1

INPUT ITEM 2

(b) FIRST LEARNING CATEGORY

INPUT ITEM 1

INPUT ITEM 2

(c) FIRST CATEGORY GROUP

INPUT ITEM 1

INPUT ITEM 2

(d) ACTUAL MEASUREMENT DATA

INPUT ITEM 1

INPUT ITEM 2

(e) SECOND LEARNING CATEGORY

INPUT ITEM 1

INPUT ITEM 2

(f) SECOND CATEGORY GROUP

INPUT ITEM 1

INPUT ITEM 2

(g) CORRESPONDING LEARNING CATEGORY

INPUT ITEM 1

INPUT ITEM 2

(h) INTEGRATED CATEGORY GROUP

INPUT ITEM 1

INPUT ITEM 2

(i) DISCRIMINATION TARGET DATA

INPUT ITEM 1

INPUT ITEM 2

(j) DISCRIMINATION TARGET LEARNING CATEGORY

INPUT ITEM 1

INPUT ITEM 2

(k) LEARNING CATEGORY COMPARISON

INPUT ITEM 1

INPUT ITEM 2

# FIG. 3

# FIG. 4

<div align="center">**INTERNATIONAL SEARCH REPORT**</div>

| International application No. |
| --- |
| PCT/JP2018/016496 |

**A. CLASSIFICATION OF SUBJECT MATTER**
Int.Cl. G05B23/02(2006.01)i

According to International Patent Classification (IPC) or to both national classification and IPC

**B. FIELDS SEARCHED**

Minimum documentation searched (classification system followed by classification symbols)
Int.Cl. G05B23/00-23/02, G01M99/00

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2017-21502 A (HITACHI HIGH-TECHNOLOGIES CORP.) 26 January 2017, paragraphs [0005], [0013]-[0105], fig. 1-16 (Family: none) | 1-14 |
| A | JP 2004-234302 A (TOSHIBA CORP.) 19 August 2004, paragraphs [0005]-[0007], [0018]-[0026], [0062], fig. 1-2 (Family: none) | 1-14 |
| A | US 2014/0046881 A1 (PRUEFTECHNIK AG) 13 February 2014, paragraphs [0028]-[0059], [0071] & EP 2696251 A2 & DE 102012015485 A1 | 1-14 |
| A | JP 2009-53938 A (TOSHIBA CORP.) 12 March 2009, paragraphs [0002]-[0019], [0031]-[0056], fig. 1-3 (Family: none) | 1-14 |
| A | JP 2015-103218 A (HITACHI, LTD.) 04 June 2015, paragraphs [0020]-[0106], fig. 1-9(c) & WO 2015/079766 A1 & CN 105992977 A | 1-14 |

☐ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 13 July 2018 (13.07.2018) | 24 July 2018 (24.07.2018) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015103218 A